# FASCICULE DE BREVET EUROPEEN

(11) **EP 3 786 034 B1**
(45) Date de publication et mention de la délivrance du brevet: **15.12.2021**
(21) Numéro de dépôt: 20192566.6
(22) Date de dépôt: 25.08.2020
(51) Int. Cl.: B62D 35/00, B62D 37/02

(54) **DISPOSITIF DE GESTION DES FLUX D'AIR ET VÉHICULE COMPRENANT UN TEL DISPOSITIF**
VORRICHTUNG ZUM STEUERN DER LUFTSTRÖME UND FAHRZEUG, DAS EINE SOLCHE VORRICHTUNG UMFASST
DEVICE FOR MANAGING THE FLOW OF AIR AND VEHICLE COMPRISING SUCH A DEVICE

(30) Priorité: 26.08.2019 FR 1909408
(43) Date de publication de la demande: 03.03.2021
(73) Titulaire: Flex-N-Gate France, 25405 Audincourt (FR)
(72) Inventeur: GUYON, Cyrille, 25600 NOMMAY (FR)
(74) Mandataire: Lavoix

(56) Documents cités:
- DE-A1- 3 145 258
- FR-A1- 3 059 978
- FR-A1- 3 060 512
- JP-A- H03 132 482
- US-A1- 2015 084 369
- US-A1- 2017 355 403
- US-A1- 2018 229 781
- US-A1- 2019 152 543

## Description

La présente invention concerne un dispositif de gestion des flux d'air pour un véhicule. La présente invention concerne, en outre, un véhicule comprenant un tel dispositif de gestion.

En particulier, la présente invention concerne dispositif de gestion des flux d'air pour un véhicule, comprenant :
- un support,
- au moins une paroi déflectrice portée par un système d'actionnement monté sur le support et configuré pour déplacer la paroi déflectrice selon une trajectoire prédéfinie par rapport au support entre une position escamotée et une position déployée.
Le FR 3 059 978 A1 divulgue un tel dispositif présentant toutes les caractéristiques du préambule de la revendication 1.

L'amélioration de l'aérodynamisme d'un véhicule permet notamment une diminution de la traînée aérodynamique et une réduction de la consommation d'énergie du véhicule.

En particulier, lors du déplacement du véhicule, l'air s'écoulant le long du véhicule passe à travers le ou chaque passage de roue du véhicule. Cet air, du fait du mouvement rotatif de la roue, est mis en turbulence et dégrade les performances aérodynamiques du véhicule en augmentant la traînée aérodynamique.

Pour limiter la quantité d'air passant dans le ou chaque passage de roue, il est connu d'équiper les véhicules de systèmes déflecteurs passifs comprenant une paroi déflectrice agencée en amont de la roue du véhicule et faisant saillie de la face inférieure du véhicule.

Toutefois, dans le cas de véhicules automobiles, ces parois déflectrices présentent une hauteur de déploiement réduite relativement à la face inférieure du véhicule, de l'ordre de 50 millimètres (mm) pour des SUV (sigle pour « Sport Utility Vehicle » en anglais, signifiant en français « véhicule sport utilitaire »), afin de limiter le risque d'impact de la paroi déflectrice sur des obstacles tels qu'un trottoir, un dos d'âne ou encore une pierre.

Il en résulte que les flux d'air ne sont pas déviés de manière optimale et que les performances aérodynamiques du véhicule ne sont pas optimales. Il en résulte alors également une augmentation accrue de la consommation en énergie du véhicule

Il est possible de prévoir un système déflecteur actif permettant de faire varier la hauteur de déploiement de la paroi déflectrice. Dans un tel système, en l'absence d'obstacle, la paroi déflectrice est pilotée pour augmenter sa hauteur de déploiement, et dès qu'un obstacle est détecté, la paroi déflectrice est pilotée pour diminuer sa hauteur de déploiement. Cette solution est compliquée à mettre en oeuvre car elle nécessite une anticipation des obstacles. En outre, cette solution est coûteuse en énergie. Elle n'est donc pas satisfaisante.

Un des objets de l'invention est de proposer un dispositif de gestion de flux présentant des performances améliorées, c'est-à-dire permettant une déviation améliorée des flux d'air, tout en étant simple et peu coûteux à mettre en œuvre.

A cet effet, l'invention concerne un dispositif de gestion du type précité dans lequel la paroi déflectrice est montée rotative par rapport au support autour d'un axe de rotation de manière à pouvoir s'effacer en cas de contact de la paroi déflectrice avec un obstacle, le dispositif de gestion comprenant un système de guidage de la paroi déflectrice selon la trajectoire prédéfinie et en rotation, le système de guidage comprenant au moins une rainure de guidage et au moins un pion de guidage mobile dans l'au moins une rainure de guidage selon la trajectoire prédéfinie entre la position escamotée et la position déployée, et mobile en rotation dans la rainure de guidage autour de l'axe de rotation, l'au moins une rainure de guidage étant ménagée dans l'un parmi la paroi déflectrice et le support et l'au moins un pion de guidage étant solidaire de l'autre parmi la paroi déflectrice et le support.

Le dispositif de gestion des flux d'air peut également comprendre l'une ou plusieurs des caractéristiques suivantes prises isolément ou selon toute combinaison techniquement possible :
- le support est destiné à être monté sur une partie du véhicule située en amont d'une roue du véhicule.
- le système d'actionnement comprend un actionneur et un organe d'entraînement de la paroi déflectrice selon la trajectoire prédéfinie, l'actionneur étant configuré pour déplacer axialement l'organe d'entraînement.
- le dispositif de gestion des flux d'air comprend une pièce d'interface reliée d'une part au système d'actionnement et d'autre part à la paroi déflectrice et la pièce d'interface présente un trou, le dispositif de gestion comprenant au moins un autre pion de guidage relié à la paroi déflectrice et à la pièce d'interface, cet autre pion de guidage étant monté rotatif dans le trou autour de l'axe de rotation.
- un trou de passage du système d'actionnement est ménagé dans la paroi déflectrice et, depuis la position déployée, la paroi déflectrice est configurée pour présenter un angle de rotation maximal de la paroi déflectrice autour de l'axe de rotation, un bord du trou de passage délimitant l'angle de rotation maximal de la paroi déflectrice.
- la position déployée définit une position d'équilibre stable de la paroi déflectrice et le dispositif de gestion comprend au moins un organe de rappel configuré pour contraindre la paroi déflectrice dans la position déployée.
- le support forme un boîtier délimitant un logement de la paroi déflectrice et la paroi déflectrice est mobile selon la trajectoire prédéfinie par rapport au support entre la position escamotée dans laquelle la paroi déflectrice est logée dans le boîtier et la position déployée dans laquelle la paroi déflectrice est située au moins en partie à l'extérieur du boîtier.
- le support présente une paroi étanche et l'actionneur est agencé au-dessus de la paroi.
- le dispositif d'actionnement est propre à actionner le déplacement de la paroi déflectrice de la position escamotée dans la position déployée lorsque la vitesse du véhicule est supérieure à une première vitesse seuil et à actionner le déplacement de la paroi déflectrice de la position déployée dans la position escamotée lorsque la vitesse du véhicule est inférieure ou égale à une deuxième vitesse seuil distincte de la première vitesse seuil.

L'invention concerne également un véhicule comprenant au moins un dispositif de gestion des flux d'air tel que défini précédemment, le dispositif de gestion étant monté sur une partie de véhicule et en amont d'une roue du véhicule.

L'invention sera mieux comprise à la lecture de la description qui va suivre, donnée uniquement à titre d'exemple, et faite en référence aux dessins annexés, parmi lesquels :
- la figure 1 est une représentation schématique en coupe d'un dispositif de gestion des flux d'air selon l'invention dans lequel une paroi déflectrice du dispositif de gestion est dans la position escamotée,
- la figure 2 est une représentation schématique en coupe du dispositif de gestion de la figure 1 dans lequel la paroi déflectrice est dans une position déployée,
- la figure 3 est une représentation schématique en coupe du dispositif de gestion de la figure 1 dans lequel la paroi déflectrice est dans une position de rotation,
- la figure 4 est une représentation schématique en perspective d'une paroi déflectrice et d'un dispositif d'actionnement de la paroi déflectrice du dispositif de gestion de la figure 1,
- la figure 5 est une représentation schématique en coupe d'une paroi déflectrice du dispositif de gestion de la figure 1,
- la figure 6 est une représentation de face de détails d'une partie d'un système de guidage et d'un système d'actionnement d'une paroi déflectrice du dispositif de la figure 1,
- la figure 7 représente une variante d'un système de guidage du dispositif de gestion de la figure 1, et
- la figure 8 est une représentation schématique en coupe d'un dispositif de gestion des flux d'air selon l'invention comprenant une paroi déflectrice selon un autre mode de réalisation.

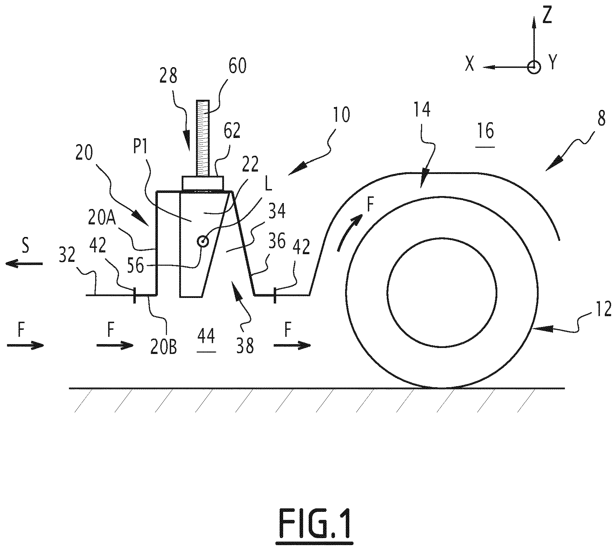

Une partie d'un véhicule 8 comprenant un dispositif de gestion 10 des flux d'air selon l'invention est représentée sur les figures 1 à 3.

Dans la suite de la description, les termes d'orientation tels que « longitudinal », « transversal », « vertical », « horizontal », « haut », « bas », « avant » et « arrière » s'étendent par référence au repère orthogonal usuel des véhicules, comprenant :
- un axe longitudinal X orienté de l'arrière vers l'avant ;
- un axe transversal Y orienté de la droite vers la gauche ; et
- un axe vertical Z orienté du bas vers le haut.

En outre, la dimension d'un élément du véhicule 8 ou du dispositif de gestion 10 mesurée selon la direction de l'axe longitudinal X est appelée « longueur », la dimension d'un élément du véhicule 8 ou du dispositif de gestion 10 mesurée selon la direction de l'axe transversal Y est appelée « largeur », et la dimension d'un élément du véhicule 8 ou du dispositif de gestion 10 mesuré selon la direction de l'axe vertical Z est appelée « hauteur ».

En outre, le plan vertical formé par l'axe longitudinal X et l'axe vertical Z est appelé « plan longitudinal » et le plan vertical formé par l'axe transversal Y et l'axe vertical Z est appelé « plan transversal ».

Le sens d'avancée du véhicule 8 est représenté sur les figures 1 à 3 par la flèche S. Le sens des flux d'air présente un sens inverse au sens d'avancée S du véhicule 8 et est représentée sur les figures 1 à 3 par la flèche F.

Dans la suite de la présente description, les termes « amont » et « aval » sont définis par rapport au sens des flux d'air impactant le véhicule 8. Ainsi, un élément dit « amont » est impacté par les flux d'air avant un élément dit « aval ».

Le véhicule 8 est, par exemple, un véhicule automobile.

Dans le cas d'espèce, le véhicule 8 comprend une roue 12 et un passage de roue 14, la roue 12 étant reçue dans le passage de roue 14. Le passage de roue 14 est un logement délimité dans la carrosserie 16 du véhicule 8 et recevant la roue 12. Le passage de roue 14 entoure en partie la roue 12. Le passage de roue 14 est dimensionné pour permettre le débattement vertical de la roue 12 du fait de la présence d'une suspension reliant la roue 12 au châssis du véhicule, et, dans le cas d'une roue 12 directrice, sa rotation autour d'un axe sensiblement vertical.

Le dispositif de gestion 10 permet de dévier les flux d'air passant sous le véhicule 8 de part et d'autre de la roue 12 afin de limiter le passage des flux d'air dans le passage de roue 14.

Le dispositif de gestion 10 comprend un support 20, au moins une paroi déflectrice 22, un système de guidage 24 de la ou chaque paroi déflectrice 22, au moins un organe de rappel élastique 25, 26, un système d'actionnement 28 de la ou chaque paroi déflectrice 22 et une pièce d'interface 30.

Le support 20 est fixé à une partie 32 du véhicule 8 située en avant de la roue 12.

A titre d'illustration, la partie 32 de véhicule 8 est un déflecteur situé sous le moteur du véhicule 8. La surface de la partie 32 de véhicule en regard du sol est appelée surface inférieure du véhicule 8.

En variante, la partie avant est un déflecteur inférieur de pare-chocs.

Le support 20 forme un boîtier délimitant un logement 34 propre à recevoir la paroi déflectrice 22.

Par exemple, le boîtier présente une forme de cloche.

En particulier, dans le présent exemple de réalisation, le support 20 comprend une première partie 20A et une deuxième partie 20B.

La première partie 20A de support 20 comprend une paroi 36 délimitant le logement 34.

En outre, la paroi 36 présente une ouverture d'entrée 38 dans le logement 34. L'ouverture d'entrée 38 débouche vers le bas. Ainsi, le logement 34 débouche par l'ouverture d'entrée 38 sur la surface inférieure du véhicule 8.

La paroi 36 est par exemple obtenue par moulage.

La paroi 36 présente des angles de dépouille permettant un démoulage direct de la paroi 36 d'un moule servant au moulage.

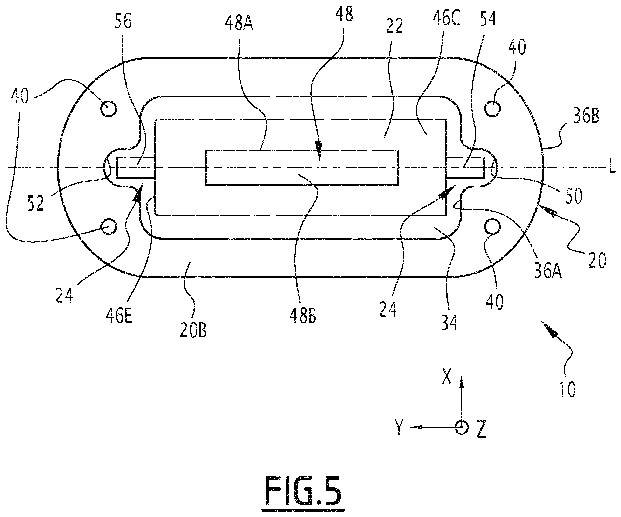

La paroi 36 présente une face interne 36A et une face externe 36B (visibles sur la figure 5). La face interne 36A est orientée vers le sol sur lequel repose le véhicule 8 tandis que la face externe 36B est opposée à la face interne 36A.

A titre d'exemple, la face interne 36A et la face externe 36B de la paroi 36 présentent en coupe dans le plan longitudinal une forme pyramidale. En variante, la face interne 36A et la face externe 36B présentent dans le plan longitudinal une forme rectangulaire.

En outre, la face interne 36A présente en coupe dans le plan transversal une forme rectangulaire.

Par exemple, dans le plan de coupe délimité par l'axe longitudinal X et l'axe transversal Y, c'est-à-dire perpendiculaire à l'axe vertical Z, la paroi 36 présente un contour fermé. En particulier, la face interne 36A et la face externe 36B présentent chacune un contour fermé.

La deuxième partie 20B de support forme une collerette de fixation du support 20 sur la partie 32 de véhicule 8.

A titre d'exemple, la deuxième partie 20B présente des trous de passage 40 de vis 42 pour la fixation du support 20 sur la partie 32 de véhicule 8.

Dans l'exemple décrit, le support 20 est fixé au niveau d'un trou ménagé dans la partie 32 de véhicule 8 et qui débouche dans un passage 44 agencé sous le véhicule 8 communiquant avec le passage de roue 14. En outre, l'ouverture d'entrée 38 dans le logement 34 coïncide avec le trou de la partie 32 de véhicule 8.

Par exemple, la paroi 36 est réalisée en un polymère.

Dans le présent exemple de réalisation, le dispositif de gestion 10 comprend une seule paroi déflectrice 22.

En variante, le dispositif de gestion 10 comprend au moins deux parois déflectrices 22.

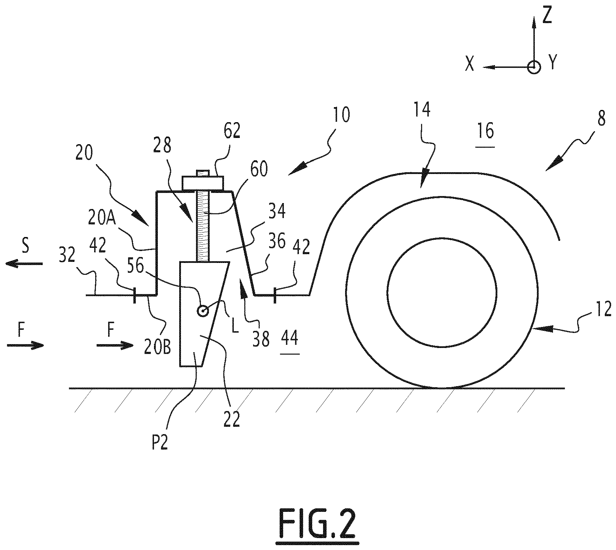

La paroi déflectrice 22 est mobile selon une trajectoire prédéfinie par rapport au support 20 entre une position escamotée P1 (visible sur la figure 1) et une position déployée P2 (visible sur la figure 2).

En particulier, la paroi déflectrice 22 est portée par le système d'actionnement 28 monté sur le support 20 et configuré pour déplacer la paroi déflectrice 22 selon la trajectoire prédéfinie par rapport au support 20 entre la position escamotée P1 et la position déployée P2.

La paroi déflectrice 22 est par exemple mobile en translation par rapport au support 20, selon la trajectoire prédéfinie, entre la position escamotée P1 et la position déployée P2.

Ainsi, le mouvement de la paroi déflectrice 22 entre la position escamotée P1 et la position déployée P2 présente au moins une composante de translation. Par exemple, entre la position escamotée P1 et la position déployée P2, la paroi déflectrice 22 peut également présenter une composante de rotation.

Par exemple, la trajectoire prédéfinie est rectiligne selon une direction sensiblement parallèle à l'axe vertical Z.

Il est entendu par « sensiblement parallèle à l'axe vertical Z » que la direction de la trajectoire prédéfinie peut définir un angle non nul avec l'axe vertical Z, par exemple un angle inférieur ou égal à 5 degrés. Ainsi, la direction de la trajectoire prédéfinie peut présenter une composante selon une direction parallèle à l'axe longitudinal X et/ou une composante selon une direction parallèle à l'axe transversal Y.

En particulier, dans la position escamotée P1, la paroi déflectrice 22 est logée dans le logement 34 du support 20. Autrement dit, dans la position escamotée P1, la paroi déflectrice 22 est en retrait dans le logement 34. La position escamotée P1 forme une position d'équilibre stable de la paroi déflectrice 22.

Par « position d'équilibre stable » on entend qu'à la suite d'une perturbation qui a éloigné la paroi déflectrice 22 de cette position, la paroi déflectrice 22 retourne spontanément dans cette position stable.

En outre, dans la position déployée P2, la paroi déflectrice 22 est située au moins en partie à l'extérieur du logement 34 du support 20. Autrement dit, dans la position déployée P2, la paroi déflectrice 22 s'étend à l'extérieur du logement 34 en saillie par rapport à la surface inférieure de véhicule 8.

Ainsi, dans la position déployée P2, la paroi déflectrice 22 fait saillie vers le bas par rapport à la partie 32 du véhicule 8 sur lequel est monté le dispositif de gestion 10.

La position déployée P2 forme également une position stable de la paroi déflectrice 22.

En outre, la paroi déflectrice 22 est montée mobile en rotation par rapport au support 20 autour d'un axe de rotation L. L'axe de rotation L est sensiblement parallèle à l'axe transversal Y.

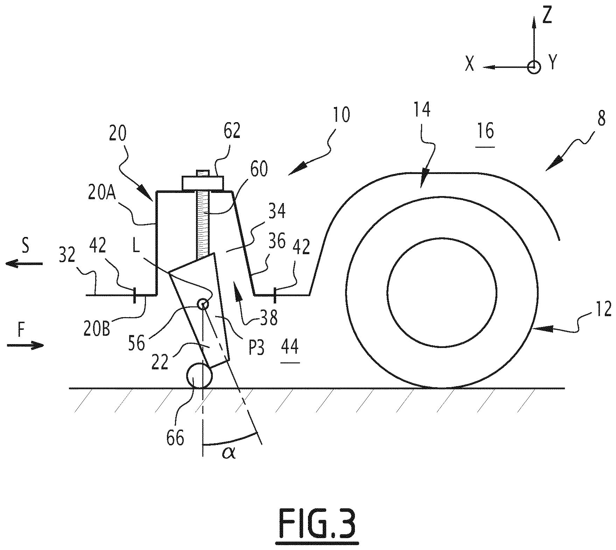

La paroi déflectrice 22 est apte à pivoter à partir de la position déployée P2 dans des positions de rotation P3 autour de l'axe de rotation L. L'une des positions de rotation P3 est représentée sur la figure 3.

Chaque position de rotation P3 est distincte de la position déployée P2. Dans chaque position de rotation P3, la paroi déflectrice 22 forme un angle α non nul avec la paroi déflectrice 22 dans la position déployée P2, appelé dans la suite angle de rotation α. Chaque position de rotation P3 est caractérisée par un angle de rotation α.

Un tel angle de rotation α est montré sur la figure 3.

En outre, dans ce mode de réalisation, chaque position de rotation P3 correspond à une position d'équilibre instable de la paroi déflectrice 22.

Par « position d'équilibre instable » on entend qu'à la suite d'une perturbation qui a éloigné la paroi déflectrice 22 de cette position, la paroi déflectrice 22 ne retourne pas spontanément dans la position instable.

Il est défini au moins une position de rotation P3 maximale de la paroi déflectrice 22. Dans la position de rotation P3 maximale, la paroi déflectrice 22 est pivotée par rapport à la position déployée P2, d'un angle de rotation maximal αₘₐₓ. Plus précisément, l'angle de rotation maximal αₘₐₓ est défini comme étant l'angle maximal que peut présenter la paroi déflectrice 22 dans la position de rotation P3 par rapport à la position déployée P2.

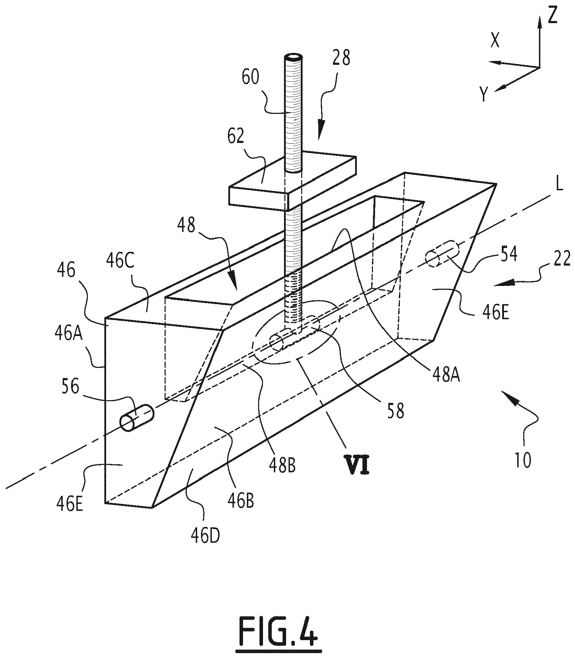

La paroi déflectrice 22 est décrite en référence à la figure 4, qui montre la paroi déflectrice 22 dans la position escamotée P1. En outre, sur cette figure, le support 20 n'est pas représenté.

La paroi déflectrice 22 comprend un corps 46.

Le corps 46 présente une paroi avant 46A, une paroi arrière 46B, une paroi supérieure 46C, une paroi inférieure 46D et deux parois latérales 46E reliant les parois supérieure 46C, inférieure 46D, avant 46A et arrière 46B ensemble.

La paroi avant 46A s'étend, par exemple, dans le plan transversal. La paroi arrière 46B est quant à elle inclinée par rapport au plan transversal.

Le corps 46 présente, en section dans un plan de coupe longitudinal, une forme pyramidale, la grande base étant située au-dessus de la petite base.

En variante, le corps 46 présente une forme différente.

Dans le présent exemple, la largeur du corps 46 est très supérieure à la longueur du corps 46. La largeur du corps 46 correspond à la largeur de la grande base du corps 46, c'est-à-dire la paroi supérieure 46C dans le cas d'espèce et la longueur du corps correspond à la longueur de la grande base du corps 46.

La largeur et la longueur du corps 46 dépendent du type de véhicule 8.

Par exemple, la largeur du corps 46 est comprise entre 100 mm (millimètres) et 600 mm.

Par exemple, la longueur du corps 46 est comprise entre 20 mm et 100 mm.

En outre, la hauteur du corps 46 dépend du type de véhicule 8 et en particulier de la garde au sol du véhicule 8 sous la partie 32 du véhicule 8 portant le dispositif de gestion 10. La garde au sol sous la partie 32 du véhicule 8 est la distance entre le sol et le point le plus bas de la partie 32 du véhicule 8.

A titre d'exemple, la hauteur du corps 46 de la paroi déflectrice 22 est comprise entre 50 mm et 250 mm.

Un trou de passage 48 du système d'actionnement est ménagé dans le corps 46 et débouche dans la paroi supérieure 46C du corps 46. Le trou de passage 48 présente un bord 48A faisant partie de la paroi supérieure du 46C du corps et un fond 48B.

Le corps 46 est par exemple réalisé en polymère.

Dans la position escamotée P1 de la paroi déflectrice 22, le corps 46 de la paroi déflectrice 22 est logé dans le logement 34 du support 20. En particulier, dans le présent exemple de réalisation, la paroi inférieure 46D du corps 46 est situé dans un même plan que le plan dans lequel s'étend le bord de l'orifice 38 de la première partie 20A de support 20.

Dans la position escamotée P1, la paroi déflectrice 22 n'est pas apte à bouger dans le logement 34.

En particulier, la première partie 20A du support 20 présente une forme adaptée à la forme du corps 46 de la paroi déflectrice 22. En particulier, dans la position escamotée P1, le support 20 empêche la paroi déflectrice 22 de pivoter.

Comme visible sur la figure 2, dans la position déployée P2 de la paroi déflectrice 22, au moins une partie du corps 46 de la paroi déflectrice 22 s'étend à l'extérieur du logement 34 formé par le support 20.

Avantageusement la hauteur mesurée entre la paroi inférieure 46D de la paroi déflectrice 22 et le sol est comprise entre 10 mm et 100 mm.

Le système de guidage 24 est propre à guider la paroi déflectrice 22 selon la trajectoire prédéfinie.

En référence aux figures 4 et 5, le système de guidage 24 comprend au moins une rainure de guidage et au moins un pion de guidage mobile dans la rainure de guidage selon la trajectoire prédéfinie entre la position escamotée P1 et la position déployée P2 et monté rotatif dans la rainure de guidage autour de l'axe de rotation L, la rainure de guidage étant ménagée dans l'un parmi la paroi déflectrice 22 et le support 20 et le pion étant solidaire de l'autre parmi la paroi déflectrice 22 et le support 20.

Dans le présent exemple de réalisation, le système de guidage 24 comprend deux rainures de guidage 50, 52, un premier pion de guidage 54, un deuxième pion de guidage 56 de guidage et un troisième pion de guidage 58.

Chaque rainure de guidage 50, 52 est ménagée dans la face interne 36B de la première partie 20A de support 20. Chaque rainure de guidage 50, 52 s'étend suivant la trajectoire prédéfinie. Chaque rainure de guidage 50, 52 s'étend par exemple sensiblement parallèlement à l'axe verticale Z suivant la trajectoire prédéfinie rectiligne. En outre, les rainures de guidage 50, 52 sont agencées l'une en face de l'autre sensiblement selon la direction de l'axe transversal Y.

Il est entendu par « sensiblement parallèlement à l'axe vertical Z » que chaque rainure de guidage 50, 52 peut présenter un angle non nul par rapport à l'axe vertical Z, par exemple un angle inférieur ou égal à 5 degrés. Ainsi, chaque rainure de guidage 50, 52 peut présenter une composante selon une direction parallèle à l'axe longitudinale X et/ou une composante selon une direction parallèle à l'axe transversal Y.

Les premier et deuxième pions de guidage 54, 56 sont solidaires des parois latérales 46E de la paroi déflectrices 22. Dans le présent exemple de réalisation, les pions de guidage 54, 56 sont coaxiaux et s'étendent suivant l'axe de rotation L.

Les premier et deuxième pions de guidage 54, 56 coopèrent chacun avec une rainure de guidage 50, 52 respective. Chaque rainure de guidage 50, 52 est propre à guider le déplacement de chacun des premier et deuxièmes pions de guidage 54, 56 entre la position escamotée P1 et la position déployée P2 de la paroi déflectrice 22 selon la trajectoire prédéfinie.

En outre, les premier et deuxième pions de guidage 54, 56 sont chacun montés pivotant autour de l'axe de rotation L dans la rainure de guidage 50, 52 correspondante. Ainsi, les premier et deuxième pions de guidage 54, 56 forment des pivots de la paroi déflectrice 22 autour de l'axe de rotation L.

Les premier et deuxième pions de guidage 54, 56 présentent par exemple chacun une forme cylindrique, axée sur l'axe de rotation L.

A titre d'exemple, les premier et deuxième pions de guidage 54, 56 sont rapportés sur la paroi déflectrice 22. En variante, les premier et deuxième pions de guidage 54, 56 sont venus de matière avec la paroi déflectrice 22.

Le troisième pion de guidage 58 est solidaire de la paroi déflectrice 22 et est, par exemple, agencé entre les premier et deuxième pions de guidage 54, 56 selon l'axe de rotation L. Autrement dit, les premier, deuxième et troisième pions de guidage 50, 52, 58 sont alignés sur l'axe de rotation L.

En particulier, le troisième pion de guidage 58 est agencé dans le fond 48B du trou de passage 48 ménagé dans le corps 46 de la paroi déflectrice 22. Le troisième pion 58 peut être agencé à une position différente que dans le fond 48B du trou de passage 48. En particulier, el troisième pion 58 peut être agencé par exemple entre le fond 48B du trou de passage 48 et la paroi supérieure 46C du corps 46 de la paroi déflectrice 22, pourvu que le troisième pion 58 soit aligné avec les premier et deuxième pions 50, 52 sur l'axe de rotation L.

Le troisième pion de guidage 58 présente par exemple une forme cylindrique axée sur l'axe de rotation L.

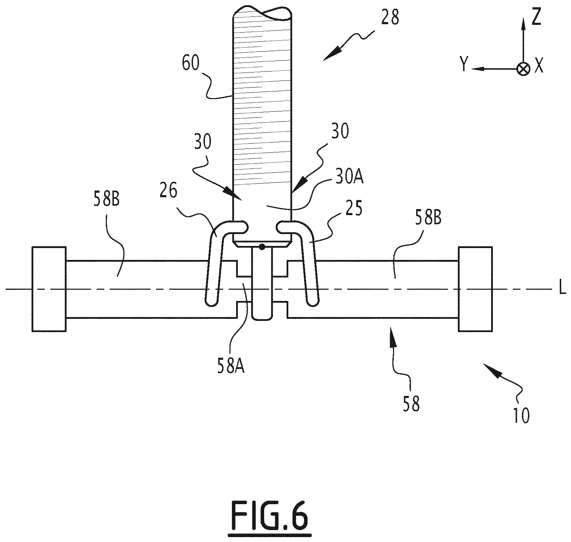

En référence à la figure 6, le troisième pion de guidage 58 présente une portion centrale 58A et des portions latérales 58B situées de part et d'autre de la portion centrale 58A selon la direction transversale Y. La portion centrale 58A présente par exemple un diamètre strictement inférieur au diamètre de chaque portion latérale 58B.

A titre d'exemple, le troisième pion de guidage 58 est rapporté sur la paroi déflectrice 22. En variante, le troisième pion de guidage 58 est venu de matière avec la paroi déflectrice 22.

Le dispositif de gestion 10 comprend par exemple deux organes de rappel 25, 26 configurés pour rappeler la paroi déflectrice 22 dans la position déployée P2.

Les organes de rappels 25, 26 sont montés entre le troisième pion de guidage 58 et la pièce d'interface 30. En particulier, chaque organe de rappel 25, 26 est solidaire d'une part du troisième pion de guidage 58 et d'autre part de la pièce d'interface 30.

Par exemple, chaque organe de rappel 25, 26 est un organe de rappel élastique, tel qu'un ressort de torsion. Dans cette configuration, les organes de rappel 25, 26 contribuent au retour de la paroi déflectrice 22 de la position de rotation P3 à la position déployée P2.

Dans le présent exemple de réalisation, l'un des organes de rappel 24 est propre à faire pivoter la paroi déflectrice 22 dans un premier sens de rotation autour de l'axe de rotation L pour ramener la paroi déflectrice 22 dans la position déployée P2 et l'autre organe de rappel 26 est propre à faire pivoter la paroi déflectrice 22 dans un deuxième sens de rotation autour de l'axe de rotation L opposé au premier sens pour ramener la paroi déflectrice 22 dans la position déployée P2.

En variante, les deux organes de rappel 25, 26 sont propres à faire pivoter la paroi déflectrice 22 autour de l'axe de rotation L dans un même sens pour ramener la paroi déflectrice 22 dans la position déployée P2.

Encore en variante, le dispositif de gestion 10 comprend un unique organe de rappel.

Le système d'actionnement 28 est configuré pour déplacer la paroi déflectrice 22 selon une direction sensiblement verticale par rapport au support 20, afin de la déplacer entre la position escamotée P1 et la position déployée P2.

Le système d'actionnement 28 comprend par exemple un organe d'entraînement 60 et un actionneur 62.

L'organe d'entraînement 60 est configuré pour déplacer la paroi déflectrice 22 selon un axe sensiblement parallèle à l'axe vertical Z.

Ainsi, l'organe d'entraînement 60 est relié d'une part à l'actionneur 62 et d'autre part au troisième pion de guidage 58 solidaire de la paroi déflectrice 22.

Par exemple, l'organe d'entraînement 60 est une vis sans fin.

Dans le cas d'espèce, la vis sans fin 60 est bloquée en rotation autour de l'axe vertical Z.

A titre d'illustration, comme visible sur la figure 4, la vis sans fin 60 traverse le support 20 et est reliée d'une part à l'actionneur 62 et d'autre part au pion de guidage 58 solidaire de la paroi déflectrice 22 par l'intermédiaire de la pièce de liaison 30.

En outre, une partie de la vis sans fin 60 est insérée dans le trou de passage 48 ménagé dans le corps de la paroi déflectrice 22.

Dans le présent exemple de réalisation, le bord 48A du trou 48 délimite l'angle de rotation maximal αₘₐₓ de la paroi déflectrice 22.

En outre, l'angle de rotation maximal αₘₐₓ dépend d'au moins l'un des paramètres compris dans la liste suivante :
- la longueur du trou de passage 48,
- la forme du trou de passage 48,
- la position de l'axe de rotation L selon l'axe vertical Z par rapport au corps 46 de la paroi déflectrice 22, et
- la hauteur de la paroi déflectrice 22.

L'actionneur 62 est configuré pour déplacer axialement la vis sans fin 60. L'actionneur 62 présente un orifice cannelé (non représenté).

La vis sans fin 60 intègre par exemple une pièce d'interface (non représentée) ayant une géométrie compatible avec la géométrie de la cannelure de l'orifice de l'actionneur 62 permettant le déplacement axial de ladite vis sans fin 60.

L'actionneur 62 est agencé au-dessus du support 20 et fixé au support 20.

Le système d'actionnement 28 est propre à actionner la translation de la paroi déflectrice 22 de la position escamotée P1 dans la position déployée P2 lorsque la vitesse du véhicule 8 est supérieure à une première vitesse seuil V1. Par exemple, la première vitesse seuil V1 est égale à 80 km/h.

En variante (non représentée), le système d'actionnement 28 est un système pignon-crémaillère. Ainsi, le système d'actionnement 28 comporte une crémaillère en tant qu'organe d'entraînement en translation 60 et l'actionneur 62 intègre une roue dentée mobile en rotation et propre à déplacer axialement la crémaillère.

En outre, le système d'actionnement 28 est propre à actionner la translation de la paroi déflectrice 20 de la position déployée P2 dans la position escamotée P1 lorsque la vitesse du véhicule 8 est inférieure ou égale à une deuxième vitesse seuil V2 distincte de la première vitesse seuil V1. Par exemple, la deuxième vitesse seuil V2 est égale à 60 km/h.

La pièce d'interface 30 est située à l'extrémité inférieure de la vis sans fin 60 et est reliée au troisième pion de guidage 58. En particulier, la pièce d'interface 30 présente un trou traversant dans lequel le troisième pion de guidage 58 est insérée.

Le fonctionnement du dispositif de gestion 10 est détaillé dans la suite.

Depuis une position initiale escamotée P1 de la paroi déflectrice 22 (figure 1), lorsque la vitesse du véhicule 8 atteint la première vitesse V1, le système d'actionnement 28 est activé et actionne le déplacement de la paroi déflectrice 22 selon la trajectoire prédéfinie dans la position déployée P2 (figure 2). En particulier, lorsque le système d'actionnement 28 est activé, la vis sans fin 60 est translatée le long d'un axe sensiblement parallèle à l'axe vertical Z, et entraîne en translation la paroi déflectrice 22 portée par la vis sans fin 60 via le troisième pion de guidage 58. En outre, chacun des premier et deuxième pions de guidage 54, 56 est aussi translaté dans une rainure de guidage 50, 52 respective le long d'une direction sensiblement parallèle à l'axe vertical Z.

Comme visible sur la figure 3, lorsque le véhicule 8 passe sur un obstacle 66 et lorsque la paroi déflectrice entre en contact ou heurte un obstacle 66 présent sur le sol, la paroi déflectrice 22 pivote autour de l'axe de rotation L depuis la position déployée P2 dans une pluralité de positions de rotation P3 (dont l'une est visible sur la figure 3). Ceci permet à la paroi déflectrice 22 de s'effacer par pivotement pour passer l'obstacle 66 sans être endommagée.

Le dispositif de gestion 10 décrit est un dispositif de gestion 10 présentant des performances améliorées, c'est-à-dire permettant une déviation optimale des flux d'air de part et d'autre de la ou chaque roue 8 du véhicule.

En effet, le dispositif de gestion 10 permet le franchissement d'obstacles 66 depuis la position déployée P2 de la paroi déflectrice 22. En effet, au contact de l'obstacle 66, la paroi déflectrice 22 pivote autour de l'axe de rotation L et permet le franchissement de l'obstacle 66 sans nécessité de devoir positionner la paroi déflectrice 22 dans la position escamotée P1. Le dispositif de gestion 10 permet donc de sauvegarder l'intégralité physique de la paroi déflectrice 22 en cas de contact avec un obstacle 66 présent sur le sol.

Le dispositif de gestion 10 évite donc un passage intempestif de la paroi déflectrice 22 entre les positions déployée P2 et escamotée P1.

En outre, le dispositif de gestion 10 permet un passage de la paroi déflectrice 22 dans chaque position de rotation P3 de manière passive. Il en résulte que le dispositif de gestion 10 est économe en énergie.

En outre, le dispositif de gestion 10 est structurellement simple. Il est également aisé à mettre en œuvre.

En outre, le dispositif de gestion 10 peut s'adapter de manière aisée aux différents types de véhicules 8 en adaptant par exemple les dimensions du corps 46 de la paroi déflectrice 22, les dimensions du trou de passage 48 ménagé dans le corps 46 de la paroi déflectrice 22 dans lequel le système d'actionnement 28 passe et/ou le positionnement de l'axe de rotation L par rapport à la paroi déflectrice 22.

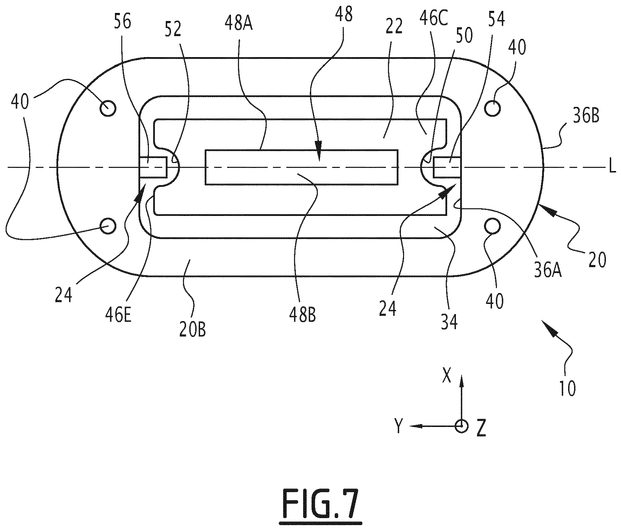

Une variante du système de guidage 24 est représentée sur la figure 7. Dans cette variante, les premier et deuxième pions de guidage 54, 56 sont montés sur la face interne 36A de la paroi 36 du support 20 et coulissent chacun dans une rainure de guidage 54, 56 prévue dans la paroi déflectrice 22.

Un autre mode de réalisation du dispositif de gestion 10 (non représentée) est à présent décrit, uniquement par différence par rapport au mode de réalisation des figures 1 à 7.

Dans ce mode de réalisation, chaque organe de rappel 25, 26 comprend un crabot ou une roue à rochet. Le retour de la paroi déflectrice 22 depuis la position de rotation P3 est réalisé lorsque la paroi déflectrice 22 revient dans la position escamotée P1, avant de retourner dans la position déployée P2. Dans ce cas, la forme de la paroi déflectrice 22 et la forme du support 36 sont adaptées pour permettre un retour en positon escamotée P1 de la paroi déflectrice 22 lorsque la paroi déflectrice 22 est dans la position de rotation P3.

Dans ce cas, chaque position de rotation P3 forme une position d'équilibre stable.

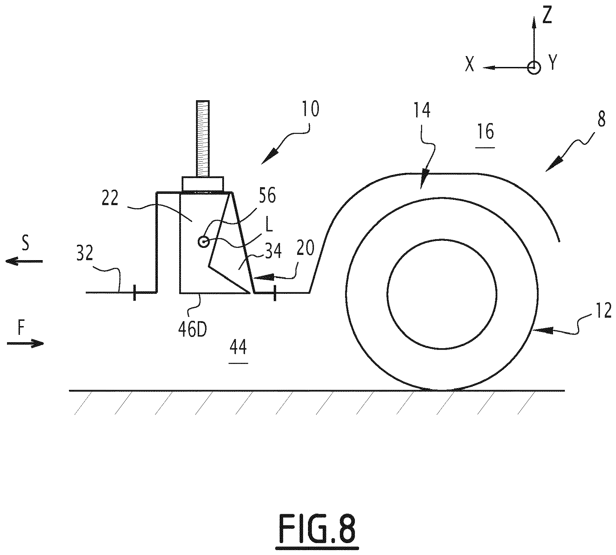

Une variante de la paroi déflectrice 22 est représentée sur la figure 8 et décrite uniquement par différence de la paroi déflectrice 22 illustrée sur les figures 1 à 7.

La paroi inférieure 46D du corps 46 de la paroi déflectrice 22 présente, par exemple, une longueur et/ou une largeur telles que la paroi inférieure 46D limite les dimensions de l'orifice d'entrée 38 dans le logement 34 lorsque la paroi déflectrice 22 est dans la position escamotée P1.

A titre d'exemple, la paroi inférieure 46D du corps 46 présente une longueur et une largeur adaptées respectivement à la longueur et à la largeur de l'ouverture d'entrée 38. Dans ce cas, la paroi déflectrice 22 obture l'orifice d'entrée 38 dans la position escamotée P1.

Le dispositif de gestion 10 décrit peut être indifféremment associé à une roue avant 12 ou arrière du véhicule 8. En outre, un dispositif de gestion 20 peut être associé à chaque roue avant 12 et/ou à chaque roue arrière du véhicule 8.

## Revendications

1. Dispositif de gestion (10) des flux d'air pour un véhicule (8), comprenant :
- un support (20),
- au moins une paroi déflectrice (22) portée par un système d'actionnement (28) monté sur le support (20) et configuré pour déplacer la paroi déflectrice (22) selon une trajectoire prédéfinie par rapport au support (20) entre une position escamotée (P1) et une position déployée (P2),
la paroi déflectrice (22) étant montée rotative par rapport au support (20) autour d'un axe de rotation (L) de manière à pouvoir s'effacer en cas de contact de la paroi déflectrice (22) avec un obstacle (66),
**caractérisé en ce que** le dispositif de gestion (10) comprend un système de guidage (24) de la paroi déflectrice (22) selon la trajectoire prédéfinie et en rotation, le système de guidage (24) comprenant au moins une rainure de guidage (50, 52) et au moins un pion de guidage (54, 56) mobile dans l'au moins une rainure de guidage (50, 52) selon la trajectoire prédéfinie entre la position escamotée (P1) et la position déployée (P2), et mobile en rotation dans la rainure de guidage (50, 52) autour de l'axe de rotation (L), l'au moins une rainure de guidage (50, 52) étant ménagée dans l'un parmi la paroi déflectrice (22) et le support (20) et l'au moins un pion de guidage (54, 56) étant solidaire de l'autre parmi la paroi déflectrice (22) et le support (20).

2. Dispositif de gestion selon la revendication 1, dans lequel le système d'actionnement (28) comprend un actionneur (62) et un organe d'entraînement (60) de la paroi déflectrice (22) selon la trajectoire prédéfinie, l'actionneur (62) étant configuré pour déplacer axialement l'organe d'entraînement (60).

3. Dispositif de gestion selon la revendication 1 ou 2, comprenant une pièce d'interface (30) reliée d'une part au système d'actionnement (28) et d'autre part à la paroi déflectrice (22) et dans lequel la pièce d'interface (30) présente un trou, le dispositif de gestion (10) comprenant au moins un autre pion de guidage (58) relié à la paroi déflectrice (22) et à la pièce d'interface (30), cet autre pion de guidage (58) étant monté rotatif dans le trou autour de l'axe de rotation (L).

4. Dispositif de gestion selon l'une quelconque des revendications 1 à 3, dans lequel un trou de passage (48) du système d'actionnement (28) est ménagé dans la paroi déflectrice (22) et dans lequel, depuis la position déployée (P2), la paroi déflectrice (22) est configurée pour présenter un angle de rotation maximal (αₘₐₓ) de la paroi déflectrice (22) autour de l'axe de rotation (L), un bord (48A) du trou de passage (48) délimitant l'angle de rotation maximal (αₘₐₓ) de la paroi déflectrice (22).

5. Dispositif de gestion selon l'une quelconque des revendications 1 à 4, dans lequel la position déployée (P2) définit une position d'équilibre stable de la paroi déflectrice (22) et dans lequel le dispositif de gestion (10) comprend au moins un organe de rappel (25, 26) configuré pour contraindre la paroi déflectrice (22) dans la position déployée (P2).

6. Dispositif de gestion selon l'une quelconque des revendications 1 à 5, dans lequel le support (20) forme un boîtier délimitant un logement (34) de la paroi déflectrice (22) et dans lequel la paroi déflectrice (22) est mobile selon la trajectoire prédéfinie par rapport au support (20) entre la position escamotée (P1) dans laquelle la paroi déflectrice (P2) est logée dans le boîtier et la position déployée (P2) dans laquelle la paroi déflectrice (22) est située au moins en partie à l'extérieur du boîtier.

7. Dispositif de gestion selon la revendication 2, dans lequel le support (20) présente une paroi (36) étanche et dans lequel l'actionneur (62) est agencé au-dessus de la paroi (36).

8. Dispositif selon l'une quelconque des revendications 1 à 7, dans lequel le dispositif d'actionnement (28) est propre à actionner le déplacement de la paroi déflectrice (22) de la position escamotée (P1) dans la position déployée (P2) lorsque la vitesse du véhicule (8) est supérieure à une première vitesse seuil (V1) et à actionner le déplacement de la paroi déflectrice (22) de la position déployée (P2) dans la position escamotée (P1) lorsque la vitesse du véhicule (8) est inférieure ou égale à une deuxième vitesse seuil (V2) distincte de la première vitesse seuil (V1).

9. Véhicule (8) comprenant au moins un dispositif de gestion (10) des flux d'air selon l'une quelconque des revendications 1 à 8, le dispositif de gestion (10) étant monté sur une partie (32) de véhicule (8) et en amont d'une roue (12) du véhicule (8).

## Patentansprüche

1. Regelvorrichtung (10) von Luftströmungen für ein Fahrzeug (8), umfassend:
- eine Halterung (20),
- mindestens eine Ablenkwand (22), die von einem Betätigungssystem (28) getragen wird, das an der Halterung (20) montiert und konfiguriert ist, um die Ablenkwand (22) entlang eines vordefinierten Weges in Bezug auf die Halterung (20) zwischen einer eingefahrenen Position (P1) und einer ausgefahrenen Position (P2) zu verstellen, wobei die Ablenkwand (22) in Bezug auf die Halterung (20) drehbar um eine Drehachse (L) montiert ist, um sich bei einem Kontakt der Ablenkwand (22) mit einem Hindernis (66) wegbewegen zu können,
**dadurch gekennzeichnet, dass** die Regelvorrichtung (10) ein Führungssystem (24) der Ablenkwand (22) entlang des vordefinierten Weges und in Drehung umfasst, das Führungssystem (24) umfassend mindestens eine Führungsnut (50, 52) und mindestens einen Führungszapfen (54, 56), der in der mindestens einen Führungsnut (50, 52) entlang des vordefinierten Wegs zwischen der eingefahrenen Position (P1) und der ausgefahrenen Position (P2) beweglich ist und in der Führungsnut (50, 52) um die Drehachse (L) drehbar ist, wobei die mindestens eine Führungsnut (50, 52) in einem von der Ablenkwand (22) und der Halterung (20) angeordnet ist und der mindestens eine Führungszapfen (54, 56) fest mit dem anderen von der Ablenkwand (22) oder der Halterung (20) verbunden ist.

2. Regelvorrichtung nach Anspruch 1, wobei das Betätigungssystem (28) einen Aktuator (62) und ein Antriebselement (60) zum Antreiben der Ablenkwand (22) entlang des vordefinierten Wegs umfasst, wobei der Aktuator (62) konfiguriert ist, um das Antriebselement (60) axial zu bewegen.

3. Regelvorrichtung nach Anspruch 1 oder 2, umfassend ein Schnittstellenteil (30), das einerseits mit dem Betätigungssystem (28) und andererseits mit der Ablenkwand (22) verbunden ist, und wobei das Schnittstellenteil (30) ein Loch aufweist, die Regelvorrichtung (10) umfassend mindestens einen weiteren Führungszapfen (58), der mit der Ablenkwand (22) und dem Schnittstellenteil (30) verbunden ist, wobei dieser weitere Führungszapfen (58) in dem Loch drehbar um die Drehachse (L) montiert ist.

4. Regelvorrichtung nach einem der Ansprüche 1 bis 3, wobei in der Ablenkwand (22) ein Durchgangsloch (48) des Betätigungssystems (28) angeordnet ist und wobei die Ablenkwand (22) ab der ausgefahrenen Position (P2) konfiguriert ist, um einen maximalen Drehwinkel (αₘₐₓ) der Ablenkwand (22) um die Drehachse (L) aufzuweisen, wobei ein Rand (48A) des Durchgangslochs (48) den maximalen Drehwinkel (αₘₐₓ) der Ablenkwand (22) begrenzt.

5. Regelvorrichtung nach einem der Ansprüche 1 bis 4, wobei die ausgefahrene Position (P2) eine stabile Gleichgewichtsposition der Ablenkwand (22) definiert und wobei die Regelvorrichtung (10) mindestens ein Rückholelement (25, 26) umfasst, das konfiguriert ist, um die Ablenkwand (22) in der ausgefahrenen Position (P2) zu halten.

6. Regelvorrichtung nach einem der Ansprüche 1 bis 5, wobei die Halterung (20) ein Gehäuse bildet, das eine Aufnahme (34) der Umlenkwand (22) begrenzt, und wobei die Ablenkwand (22) entlang der vorbestimmten Bahn in Bezug auf die Halterung (20) zwischen der eingefahrenen Position (P1), in der die Ablenkwand (P2) in dem Gehäuse untergebracht ist, und der ausgefahrenen Position (P2), in der sich die Ablenkwand (22) mindestens teilweise außerhalb des Gehäuses befindet, beweglich ist.

7. Regelvorrichtung nach Anspruch 2, wobei die Halterung (20) eine abgedichtete Wand (36) aufweist und wobei der Aktuator (62) oberhalb der Wand (36) angeordnet ist.

8. Vorrichtung nach einem der Ansprüche 1 bis 7, wobei die Betätigungsvorrichtung (28) dazu geeignet ist, um die Verstellung der Ablenkwand (22) aus der eingefahrenen Position (P1) in die ausgefahrene Position (P2) zu betätigen, wenn die Geschwindigkeit des Fahrzeugs (8) größer ist als eine erste Schwellenwertgeschwindigkeit (V1) und die Verstellung der Ablenkwand (22) aus der ausgefahrenen Position (P2) in die eingefahrene Position (P1) zu betätigen, wenn die Geschwindigkeit des Fahrzeugs (8) kleiner als oder gleich wie eine zweite Schwellenwertgeschwindigkeit (V2) ist, die sich von der ersten Schwellenwertgeschwindigkeit (V1) unterscheidet.

9. Fahrzeug (8), umfassend mindestens eine Regelvorrichtung (10) von Luftströmungen nach einem der Ansprüche 1 bis 8, wobei die Regelvorrichtung (10) an einem Abschnitt (32) des Fahrzeugs (8) und stromaufwärts von einem Rad (12) des Fahrzeugs (8) montiert ist.

## Claims

1. An air flow management device (10) for a vehicle (8), comprising:
- a support (20),
- at least one deflector wall (22) supported by an actuating system (28) mounted on the support (20) and configured to move the deflector wall (22) along a predefined trajectory relative to the support (20) between a retracted position (P1) and a deployed position (P2), the deflector wall (22) being mounted rotating relative to the support (20) about an axis of rotation (L) so as to be able to retract in case of contact of the deflector wall (22) with an obstacle (66),
**characterized in that** the management device (10) comprises a guide system (24) for guiding the deflector wall (22) along the predefined trajectory and in rotation, the guide system (24) comprising at least one guide groove (50, 52) and at least one guide pin (54, 56) movable in the at least one guide groove (50, 52) along the predefined trajectory between the retracted position (P1) and the deployed position (P2), and rotatable in the guide groove (50, 52) about the axis of rotation (L), the at least one guide groove (50, 52) being arranged in one among the deflector wall (22) and the support (20) and the at least one guide pin (54, 56) being secured to the other among the deflector wall (22) and the support (20).

2. The management device according to claim 1, wherein the actuating system (28) comprises an actuator (62) and a drive member (60) of the deflector wall (22) along the predefined trajectory, the actuator (62) being configured to move the drive member (60) axially.

3. The management device according to claim 1 or 2, comprising an interface part (30) connected on the one hand to the actuating system (28) and on the other hand to the deflector wall (22) and wherein the interface part (30) has a hole, the management device (10) comprising at least one other guide pin (58) connected to the deflector wall (22) and the interface part (30), this other guide pin (58) being mounted rotating in the hole about the axis of rotation (L).

4. The management device according to any one of claims 1 to 3, wherein a passage hole (48) of the actuating system (28) is arranged in the deflector wall (22) and, from the deployed position (P2), the deflector wall (22) is configured to have a maximal angle of rotation (αₘₐₓ) of the deflector wall (22) about the axis of rotation (L), one edge (48A) of the passage hole (48) delimiting the maximal angle of rotation (αₘₐₓ) of the deflector wall (22).

5. The management device according to any one of claims 1 to 4, wherein the deployed position (P2) defines a stable equilibrium position of the deflector wall (22) and wherein the management device (10) comprises at least one return member (25, 26) configured to constrain the deflector wall (22) in the deployed position (P2).

6. The management device according to any one of claims 1 to 5, wherein the support (20) forms a case delimiting a housing (34) of the deflector wall (22) and the deflector wall (22) is movable along the predefined trajectory relative to the support (20) between the retracted position (P1) in which the deflector wall (P2) is housed in the case and the deployed position (P2) in which the deflector wall (22) is located at least partially outside the case.

7. The management device according to claim 2, wherein the support (20) has a tight wall (36) and the actuator (62) is arranged above the wall (36).

8. The device according to any one of claims 1 to 7, wherein the actuating device (28) is able to actuate the movement of the deflector wall (22) from the retracted position (P1) to the deployed position (P2) when the speed of the vehicle (8) is above a first threshold speed (V1) and to actuate the movement of the deflector wall (22) from the deployed position (P2) to the retracted position (P1) when the speed of the vehicle (8) is less than or equal to a second threshold speed (V2) separate from the first threshold speed (V1).

9. A vehicle (8) comprising at least one air flow management device (10) according to any one of claims 1 to 8, the management device (10) being mounted on a part (32) of the vehicle (8) and upstream of a wheel (12) of the vehicle (8).
